# EUROPÄISCHE PATENTANMELDUNG

(11) **EP 1 517 257 A1**
(43) Veröffentlichungstag der Anmeldung: **23.03.2005**
(21) Anmeldenummer: 04077571.0
(22) Anmeldetag: 16.09.2004
(51) Int. Cl.: G06F 17/60

(54) **Prüfvorrichtung und Verfahren zum Herstellen einer Prüfbescheinigung**

(30) Priorität: 16.09.2003 NL 1024304
(71) Anmelder: Vereniging Eigen Huis, 3821 BT Amersfoort (NL)
(72) Erfinder: Buis, Lieuwe, 3831 AD Leusden (NL)
(74) Vertreter: Ferguson, Alexander

(57) **Zusammenfassung**

Die Erfindung bezieht sich auf eine Prüfvorrichtung zum Herstellen einer Prüfbescheinigung, wobei die Prüfvorrichtung Computermittel umfassend einen Bildschirm, Eingabemittel, eine Verarbeitungsvorrichtung und Speichermittel umfaßt,
wobei die Speichermittel mit einem Datenbestand versehen sind, umfassend eine Anzahl, in einer Anzahl Wahllisten, geordneter, vorab definierter Wahlmöglichkeiten, die zusammen einen Prüfbaum zum Eingeben von Daten bezüglich eines während einer Prüfung konstatierten Defekts bilden,
wobei die Verarbeitungsvorrichtung mit Programmanweisungen zum Ausführen der nachfolgenden Schritte versehen ist:
das Darstellen einer Anzahl verschiedener Wahllisten mit Wahlmöglichkeiten auf dem Bildschirm, wobei die wiedergegebenen Wahlmöglichkeiten mittels der Eingabemittel zum Eingeben eines konstatierten Defekts zu selektieren sind; und
das Verarbeiten von selektierten Wahlmöglichkeiten aus den verschiedenen Wahllisten eines eingegebenen Defekts zu einer zu einem Satz geordneten sprachlichen Äußerung für Zufügung an die Prüfbescheinigung.

## Beschreibung

De Erfinding bezieht sich auf eine Prüfvorrichtung und ein Verfahren zum Herstellen einer Prüfbescheinigung. Die Erfindung bezieht sich weiter auf ein Computerprogramm umfassend Programmanweisungen, die falls in einem Computer geladen, zumindest einen Teil der Prüfvorrichtung zum Herstellen einer Prüfbescheinigung bilden. Die Erfindung bezieht sich weiter auf ein Computerprogramm, umfassend Programmanweisungen zum durch einen Computer Ausführen lassen des Verfahrens zum Herstellen einer Prüfbescheinigung.

Die Erfindung bezieht sich besonders auf eine Prüfvorrichtung und ein Verfahren zum Prüfen von Immobilien.

Bei der heutigen Industrie ist Qualität besonders wichtig. Deshalb wird ein Produkt oft während und/oder nach der Produktion einer Prüfung unterworfen. Das Produkt wird dann an Hand von vorab bestimmten Kriterien genehmigt oder abgelehnt. In dem Fall einer Prüfung, und insbesondere einer Prüfung für Immobilien, werden zum Beispiel vorgedruckte Dokumente benutzt, die durch die Person welche die Prüfung ausführt an der Stelle des Immobiliars eingefüllt werden. Die vorgedruckten Dokumente bilden nach Ausfüllung einer Prüfbescheinigung, oder in diesem Fall auch Abnahmezeugnis genannt, worin alle Defekte und Bemerkungen bezüglich der geprüften Sache aufgenommen sind.

Ein Nachteil dieses Verfahrens ist, daß die prüfende Person während einer Prüfung die konstatierten Defekte und Bemerkungen bezüglich der geprüften Sache, auf den vorgedruckten Dokumenten beschreiben muß. In dieser Sinne, umfaßt die Prüfbescheinigung einen vorgedruckten Teil, der von der prüfenden Person handgeschrieben ergänzt ist.

Außer daß der handgeschriebene Teil manchmal schwierig lesbar ist, ist das mit der Hand Ausfüllen der vorgedruckten Dokumente einen ineffizienten und mühsamen Prozeß, weil das Ausfüllen oft auf Lokation, zum Beispiel während eines Rundgangs durch das zu prüfende Immobiliar geschehen wird.

Ein weiterer Nachteil der Benutzung von vorgedruckten Dokumenten ist, daß diese oft geeignet gemacht worden sind zum Herstellen einer Prüfbescheinigung von Sachen von unterschiedlichen Typen. Deshalb stehen auf derartigen vorgedruckten Dokumenten oft Daten, die nur für eine bestimmte Art von Sache wichtig sind und die für das Prüfen von Sachen eines anderen Typs nicht benutzt werden. Das macht eine Prüfbescheinigung unnötig lang und hierdurch für einen Konsument oft unlesbar.

Es ist eine Aufgabe der Erfindung um obengenannte Nachteile zumindest teilweise aufzuheben.

Hierzu verschafft die Erfindung eine Prüfvorrichtung zum Herstellen einer Prüfbescheinigung, wobei die Prüfvorrichtung Computermittel, umfassend einen Bildschirm, Eingabemittel, eine Verarbeitungsvorrichtung und Speichermittel umfaßt,
wobei die Speichermittel mit einem Datenbestand versehen sind, umfassend eine Anzahl, in einer Anzahl Wahllisten, geordneter, vorab definierter Wahlmöglichkeiten, die zusammen einen Prüfbaum zum Eingeben von Daten bezüglich eines während einer Prüfung konstatierten Defekts bilden,
wobei die Verarbeitungvorrichtung mit Programmanweisungen zum Ausführen der nächsten Schritte versehen ist:
das Darstellen einer Anzahl verschiedener Wahllisten mit Wahlmöglichkeiten auf dem Bildschirm, wobei die wiedergegebenen Wahlmöglichkeiten mittels der Eingabemittel zum Eingeben eines konstatierten Defekts zu selektieren sind; und
das Verarbeiten von selektierten Wahlmöglichkeiten aus den verschiedenen Wahllisten eines eingegebenen Defekts zu einer zu einem Satz geordneten sprachlichen Äußerung für Zufügung an die Prüfbescheinigung.

Das Registrieren eines Defekts besteht aus dem Selektieren von Wahlmöglichkeiten. Die möglichen Wahlen und Wahllisten sind vorab definiert und bilden zusammen den Prüfbaum.

Das Treffen einer Anzahl Wahlen konvergiert zu einem vorab definierten Defekt der geprüften Sache. In dem Fall einer Prüfung von Immobilien gibt es zum Beispiel Wahllisten bezüglich der möglichen Lokationen eines Objekts, Objekte an der gewählten Lokation und Defekte eines gewählten Objekts. Die verschiedenen Wahllisten können auf dem Bildschirm gezeigt werden und die prüfende Person gibt mittels der Eingabemittel, wie zum Beispiel eines Keyboards, oder eines Touchscreens, ihre Wahl ein.

Die Verarbeitungseinheit, wie zum Beispiel ein Mikroprozessor, verarbeitet die eingegebenen Daten zu einer Prüfbescheinigung, die zum Beispiel durch die Druckvorrichung gedruckt werden kann. Vorzugsweise ist die Prüfvorrichtung dazu mit einer Druckvorrichtung zum Drucken der zu einem Satz geordneten sprachlichen Äußerung zum Herstellen eines Drucks der Prüfbescheinigung versehen.

Das Verfassen einer Prüfbescheinung besteht hauptsächlich aus dem Treffen von Wahlen aus der Wahlliste, die auf dem Bildschirm gezeigt wird. Einerseits, kann hierdurch das Eingeben eines Defekts effizient und schnell stattfinden. Anderseits generiert die Arbeitverarbeitungsvorrichtung während oder nach der Prüfung automatisch die Prüfbescheinigung, die hierdurch nahezu direkt nach der Prüfung zur Verfügung steht. Vorzugsweise ist die Prüfbescheinigung hauptsächlich zum Nennen der Sachen worin während der Prüfung Defekte konstatiert sind, beschränkt. Direkt nach der Prüfung kann die Prüfbescheinigung auf dem Drucker gedruckt werden und dem Kunden ausgehändigt werden.

Dadurch daß die Verarbeitungsvorrichtung zum Umformen der eingegebenen Daten eines Defekts zu einer zu einem Satz geordneten sprachlichen Äußerung in der Prüfbescheinigung eingerichtet ist, wird die Lesbarheit der Prüfbescheinigung weiter verbessert.

Ein weiterer Vorteil bei der Benutzung eines Mikroprozessors als Verarbeitungseinheit ist, daß die eingegebenen Daten digital für eventuelle weitere Verarbeitung zur Verfügung stehen. So stehen die mittels der Vorrichtung nach der Erfinding registrierten Daten zur Verfügung um, eventuell automatisiert und/oder unter Benutzung der Datawarehouse Techniken, dynamische Übersichten und Berichterstattungen herzustellen. Mit der bekannten Vorrichtung und Arbeitsweise sind die gespeicherten Daten kaum statistisch und/oder automatisiert zu bearbeiten.

Vorzugsweise umfassen die Programmanweisungen Anweisungen zum Steuern und Wiedergeben der Wahllisten in Abhängigkeit der selektierten Wahlmöglichkeiten.

Vorzugsweise umfaßt der Prüfbaum eine Anzahl Wahllisten, wobei das Selektieren einer Wahlmöglichkeit aus einer ersten Wahlliste bestimmt, welche folgende Wahlliste auf dem Bildschirm wiedergegeben wird, und
wobei das Selektieren einer Wahlmöglichkeit aus verschiedenen Wahllisten zu einem konstatierten Defekt konvergiert. Also besteht das Registrieren eines Defekts aus dem Treffen von Wahlen aus sich selbst erneuernden Wahllisten, wobei die Wahl bestimmt welchen nächsten Satz Wahlen präsentiert wird, und wobei die Wahlen zu einem vorab definierten Defekt konvergieren, die mit dem konstatierten Defekt der geprüften Sache übereinstimmt.

In einer Ausführungsform umfassen die Speichermittel weiter an den Wahlmöglichkeiten gekoppelte Textteile. Vorzugsweise umfaßt die Verarbeitungsvorrichtung einen Arbeitsspeicher zum hierin Anordnen der mit einer selektierten Wahlmöglichkeit aus einer Wahlliste gekoppelten Textteile.

Vorzugsweise ist die Verarbeitungsvorrichtung mit weiteren Programmanweisungen zum Umformen und/oder Ordnen der mit den selektierten Wahlmöglichkeiten aus den verschiedenen Wahllisten eines eingegebenen Defekts gekoppelten Textteile zu einer zu einem Satz geordneten sprachlichen Äußerung für Zufügung an die Prüfbescheinigung. Nach Eingabe aller Daten bezüglich eines Defekts, generiert die Verarbeitungsvorrichtung automatisch eine zu einem Satz geordnete sprachliche Äußerung, die den eingegebenen Defekt umschreibt, für Zufügung an die Prüfbescheinigung. Also kann die Umschreibung eines Defekts aus geordneten Textteilen aufgebaut sein, wodurch es nicht nötig ist, um die Speichermittel mit Sätzen zur Umschreibung aller möglich selektierbaren Defekte zu versehen. Hierdurch kann die benötigte Speicherkapazität stark reduziert werden.

In einer Ausführungsform umfaßt die Prüfvorrichtung weiter Kommunikationsmittel, und vorzugsweise Kommunikationsmittel die für eine mobile Kommunikation eingerichtet sind. Durch diese Kommunikationsmittel können Daten mit einem zentralen Computer ausgewechselt werden. Hierbei kann der zentrale Computer zum Verarbeiten der eingegebenen Daten zu einer Prüfbescheinigung wirksam sein.

In einer alternativen Ausführungsform ist eine lokale Verarbeitungsvorrichtung wirksam zum Verarbeiten eingegebener Daten. Hierbei umfaßt die Prüfvorrichtung vorzugsweise erste Speichermittel zum Speichern des Prüfbaums, zweite Speichermittel zum Speichern von Daten bezüglich eines Prüfauftrags, und dritte Speichermittel zum Speichern der eingegebenen Daten der Prüfbescheinigung. Auf diese Weise kann die Prüfvorrichtung während zum Beispiel einer Prüfung selbständig (lokal) funktionieren, das heißt ohne Kommunikation mit dem zentralen Computer.

Eine große Anzahl Daten bezüglich einer Prüfung, wie Basisinformation in der Form von zum Beispiel dem Namen, der Adresse, dem Wohnort, einer Telefonnummer, usw. des Auftraggebers, sind oft in digitaler Form bei der Verwaltung vorhanden. Durch diese Information ab einem zentralen Computer zu der Prüfvorrichtung weiterzuschicken, wobei die Prüfvorrichtung die betreffende Information speichert, braucht diese Information nicht mehr durch die prüfende Person in die Prüfvorrichtung eingegeben zu werden und steht diese Information zur Verfügung um in der Prüfbescheinigung aufgenommen zu werden. Außer daß hiermit Zeit gespart wird kann diese Information zugleich beim Planen noch auszuführender Prüfungen benutzt werden.

In einer Ausführungsform sind die ersten, zweiten und/oder dritten Speichermittel entkoppelbar angeordnet zum Übertragen der Speichermittel in eine weitere Prüfvorrichtung. Durch das Übertragen der Speichermittel in eine weitere Prüfvorrichtung, kann diese neue Vorrichtung nach der Situation und den Einstellungen der vorigen Prüfvorrichtung, wie diese vor dem Ausnehmen der Speichermittel war, ingerichtet werden. Hiermit wird nahezu verhütet, daß Daten zum Beispiel durch ein Fehlen der Prüfvorrichtung verlorengehen.

Vorzugsweise ist die Prüfvorrichtung für mobile Benutzung eingerichtet. Hierzu kann die Prüfvorrichtung zum Beispiel mit einer Energieanlage in der Form von Batterien, eventuell wiederaufladbar, versehen sein. Weiter kann die Prüfvorrichtung einen tragbaren Computer benutzen.

Es ist hierbei vorteilhaft, falls die Prüfvorrichtung eine Diebstahlsicherung umfaßt. In einer Ausführungsform umfaßt die Diebstahlsicherung eine Spannungsbewachung, die an eine externe Stromquelle anzuschließen ist, wobei die Diebstahlsicherung zum Generieren eines akustischen Signals beim Wahrnehmen von einem Ausfallen der Stromquelle eingerichtet ist. Vorzugsweise umfaßt die externe Stromquelle einen Autoakku oder ein Elektrizitätsnetz.

Vorzugsweise ist die Prüfvorrichtung zum Prüfen von Immobilien eingerichtet, wobei die vorab definierten Wahlmöglichkeiten vorzugsweise Lokationen, Objekte an der gewählten Lokation und Defekte des gewählten Objekts umfassen.

Die Erfindung verschafft weiter ein Verfahren zum Produzieren einer Prüfbescheinigung mittels einer Prüfvorrichtung umfassend Computermittel umfassend einen Bildschirm, Eingabemittel, eine Verarbeitungsvorrichtung und Speichermittel,
wobei die Speichermittel mit einem Datenbestand versehen sind, umfassend eine Anzahl, in einer Anzahl Wahllisten, geordneter, vorab definierter Wahlmöglichkeiten, die zusammen einen Prüfbaum zum Eingeben von Daten bezüglich eines während einer Prüfung konstatierten Defekts bilden,
wobei das Verfahren die nachfolgenden Schritte umfaßt:
das Darstellen einer Anzahl verschiedener Wahllisten mit Wahlmöglichkeiten auf dem Bildschirm;
das Selektieren von zumindest **einer** der auf dem Bildschirm dargestellen Wahlmöglichkeiten mittels der Eingabemittel zum Eingeben eines konstatierten Defekts; und
das Verarbeiten von selektierten Wahlmöglichkeiten aus den verschiedenen Wahllisten eines eingegebenen Defekts zu einer zu einem Satz geordneten sprachlichen Äußerung für Zufügung an die Prüfbescheinigung.

Vorzugsweise umfaßt der Prüfbaum eine Anzahl Wahllisten, wobei das Selektieren einer Wahlmöglichkeit aus einer ersten Wahlliste bestimmt welche folgende Wahlliste auf dem Bildschierm wiedergegeben wird, und wobei das Selektieren einer Wahlmöglichkeit aus verschiedenen Wahllisten zum konstatierten Defekt konvergiert. Es ist dabei vorteilhaft, wenn die Daten eines Defekts durch einen oder mehrere Wahlmenüs eingegeben werden. Das fördert die Benutzerfreundlichkeit der Arbeitsweise nach der Erfindung und ist auch für unerfahrene Benutzer schnell anzuwenden.

Vorzugsweise umfaßt die Verarbeitungvorrichtung einen Arbeitsspeicher, wobei nach dem Selektieren einer Wahlmöglichkeit aus einer Wahlliste ein mit der selektierten Wahlmöglichkeit korrespondierender Textteil in dem Arbeitsspeicher angeordnet wird. Vorzugsweise formt die Verarbeitungsvorrichtung die mit den selektierten Wahlmöglichkeiten aus den verschiedenen Wahllisten eines eingegebenen Defekts korrespondierenden Textteile in dem Arbeitsspeicher um zu einer zu einem Satz geordneten sprachlichen Äußerung für Zufügung an die Prüfbescheinigung.

In einer Ausführungsform sind die vorab definierten Wahlmöglichkeiten angepasst zum Prüfen von Immobilien. Die auf dem Bildschirm gezeigten Wahlmöglichkeiten umfassen dann zum Beispiel mögliche Lokationen von Objekten in Immobilien, Objekte an der gewählten Lokation und Defekte des gewählten Objekts.

Die Erfindung verschafft weiter ein Computerprogramm umfassend Programmanweisungen, die falls in einem Computer geladen, zumindest einen Teil der Verarbeitungsvorrichtung wie hieroben beschrieben umfassen.

Die Erfindung verschafft weiter ein Computerprogramm umfassend Programmanweisungen zum durch einen Computer Ausführen lassen der Arbeitsweise wie hieroben umschrieben.

Vorzugsweise ist das Computerprogramm auf einem Datenträger enthalten, oder in einem Computerspeicher gespeichert.

Zum Schluß verschafft die Erfindung ein Computerdatensignal in einer Trägerwelle enthalten, zum Ausführen der Arbeitsweise wie hieroben beschrieben.

Die Erfindung wird an Hand der in den beigefügten Zeichnungen wiedergegebenen Beispielsausführung erläutert werden. Gezeigt wird in:
Figur 1 eine Beispielausführungsform einer Prüfvorrichtung gemäß der Erfindung;
Figur 2 eine Vorrichtung zum Eingeben von Daten;
Figur 3 ein Ladesystem zum Aufladen von wiederaufladbaren Batterien der Eingabe- und Druckvorrichtung mit einem Anschluß auf dem Elektrizitätznetz versehen;
Figur 4 das Ladesystem von Figur 4, mit einem Anschluß auf einem Autoakku versehen;
Figur 5 ein Blockdiagramm zum Registrieren eines Defekts; und

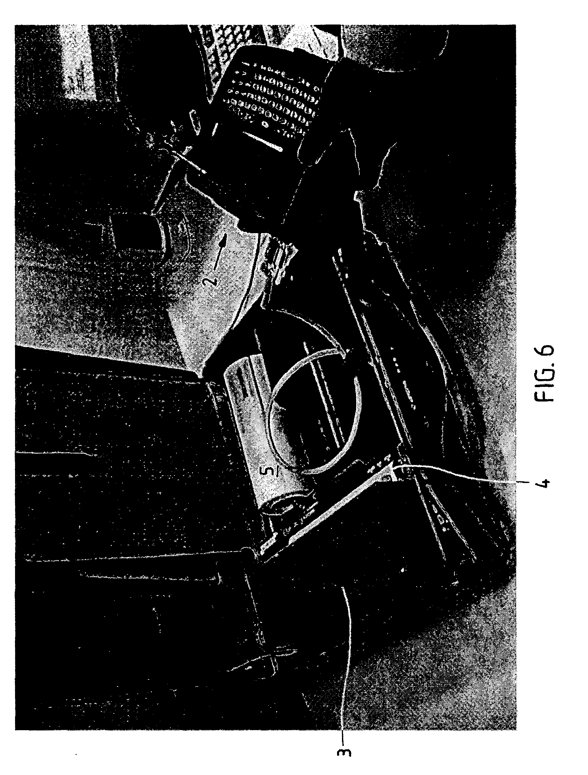

Figur 6 das Koppeln der Vorrichtung zum Eingeben von Daten mit einer Druckvorrichtung zum Drucken einer Prüfbescheinigung.

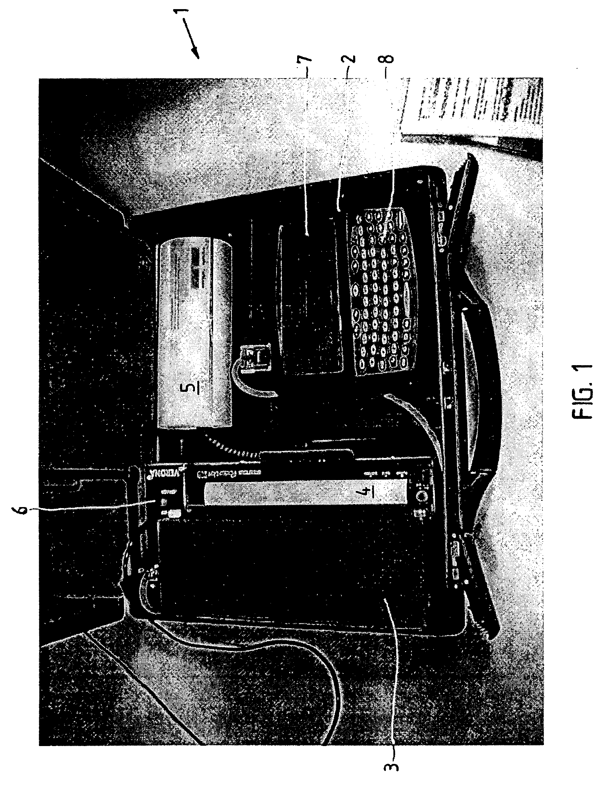

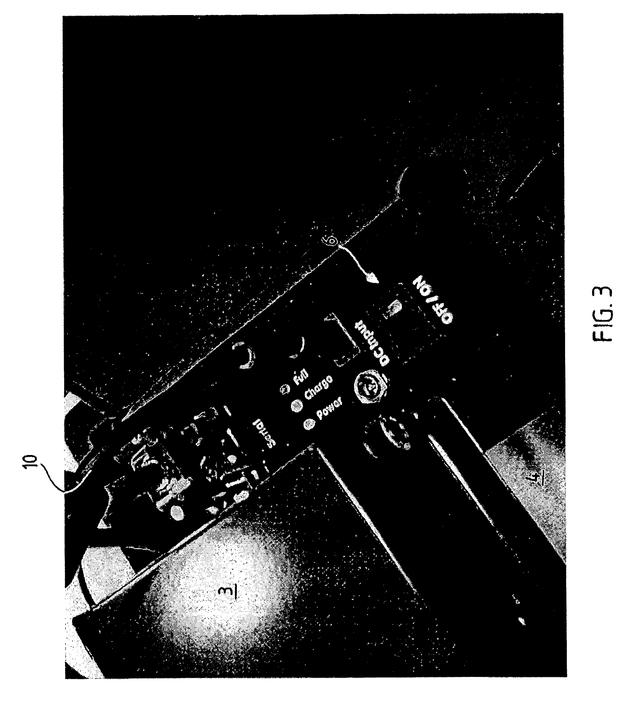

Wie in Figur 1 gezeigt ist eine Beispielsausführung der Prüfvorrichtung gemäß der Erfindung in einem Koffer 1 anzuordnen. Der Koffer 1 umfaßt einen tragbaren Computer 2, einen Drucker 3, Anschlußschnüre, Ersatzmaterialien, wie zum Beispiel eine Ersatzrolle Papier 5, und einen Raum für Bescheinigungsmappen. Sowohl der Computer 2, wie der Drucker 3 sind mit einer eigenen Batterie versehen, vorzugsweise wiederaufladbar, die diese vorzugsweise einen völligen Arbeitstag mit Energie versehen kann. Das Innere des Koffers 1 ist völlig auf die Benutzung der Prüfvorrichtung abgestimmt und umfaßt Raum zum Aufnehmen der einzelnen Komponente. Weiter ist ein Ladesystem 6 in dem Koffer angeordnet, zum Aufladen oder während langerer Zeit Aufrechterhalten der Batterien des Computers 2 und/oder Druckers 3. Das Ladesystem 6, wie in der Figur 3 gezeigt, ist via eine Anschlußschnur 10 mit einem Gerätsteckkontakt auf dem Elektrizitätsnetz anzuschließen zum, eventuell gleichzeitig, Aufladen des Computers 2 und Druckers 3. Als Alternativ ist das Ladesystem 6 auch an einen Autoakku anzuschließen durch eine Anschlußschnur 11 mit einem Stecker 12 für Anschluß in einem Steckkontakt in einem Auto.

Das Ladesystem 6 ist mit einer Diebstahlsicherung versehen. Sobald die Netzspannung des Ladesystems 6 unterbrochen wird, folgt nach etwa fünf Sekunden einen Alarmton von hohem Volumen. Dieser Ton ist erst nach fünfzehn Sekunden zu unterbrechen oder stoppt automatischen nach etwa 90 Sekunden. Diese Funktion ist als Diebstahlalarm entwickelt, so daß der Koffer 1 mit angeschlossenem Ladesystem 6 in einen zu prüfenden Bauobjekt hingestellt werden kann und beim Entwenden (die Spannung wird dann losgekoppelt) der Alarm schlägt. Das Schlagen des Alarm ist nur zu verhüten durch das rechtzeitig Eindrücken eines verdeckt aufgestellten Knopfs auf der Prüfvorrichtung.

Als mobile Prüfvorrichtung gehört die hierbeschriebene Beispielsausführungsform zu einem einzigartigen Konzept, das ab der Planung eines Prüfantrages bis einschließlich der finanziellen Abhandlung einer gelieferten Leistung Unterstützung gibt. Dieses Konzept ist zunächst entwickelt und hierunter weiter beschrieben zum Prüfen von Immobilien von einem Baufachmann, aber kann auch zum Prüfen von anderen (Im)Mobilien benutzt werden.

Die Schalterfunktion des Konzepts wird hierbei durch einen "Callcenter" geformt mit Mitarbeitern die eine Anfrage so effizient wie möglich an dem richtigen Baufachmann koppeln. Ein Planungsbüro macht eine Verabredung in dem Terminkalender des Baufachmanns, welcher auf einem zentralen Computer geführt wird. Sobald der Baufachmann die Prüfvorrichtung mit dem zentralen Computer (zum Beispiel via Internet) koppelt, werden neue geplande Verabredungen aus dem zentralen Computer in den Speicher der Prüfvorrichtung gesetzt. Während dem Auswechseln von Daten mit dem zentralen Computer werden ebenfalls Änderungen und verfallene Verabredungen gemeldet, und können Prüfdaten zu dem zentralen Computer geschickt werden. Ein Alarmsignal weist den Baufachmann auf alle Änderungen im Terminkalender, die die Prüfvorrichtung erhalten hat und die vom Baufachmann befestigt werden müssen. Solange das nicht geschieht, wird die Prüfvorrichtung regelmäßig die nicht befestigten Änderungen mittels eines akustischen Signals an den Benutzer melden bleiben und sie mittels eines Schirms zeigen.

Die Prüfdaten die zu dem zentralen Computer geschickt werden, stehen für statistische Bearbeitung in einem Datawarehouse zur Verfügung. Eine HTML Kopie der Prüfbescheinigung wird auf einem Netzwerk zur Verfügung gestellt (extra Netz), wodurch die Bescheinungsdaten nach dem Auswechseln via zum Beispiel Internet, abgefragt werden können.

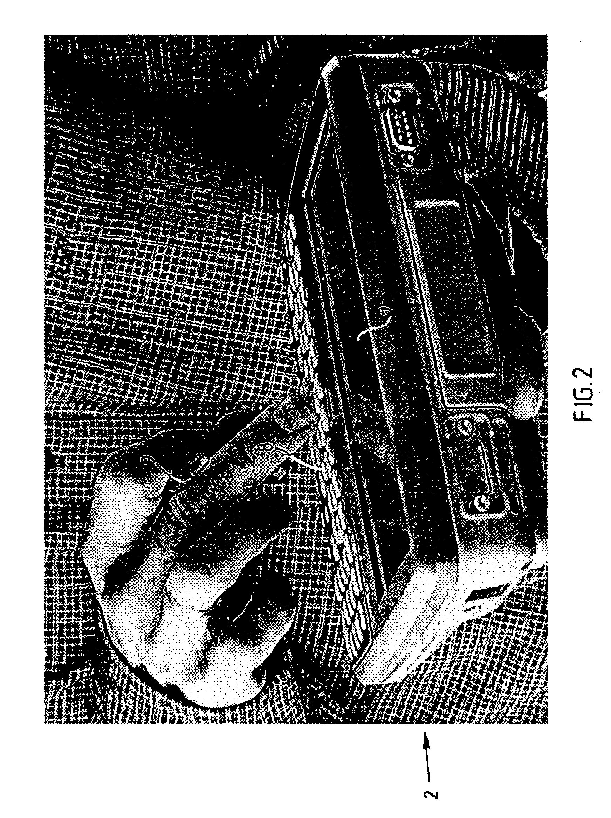

Das Herz der Prüfvorrichtung gemäß dieser Beispielausführungsform wird durch einen Palmtop Computer 2 (H/PC) gebildet. Zum Ausführen einer Prüfung kann der H/PC 2 von möglich anderen Teilen der Prüfvorrichtung entkoppelt werden, so daß nur der H/PC 2 durch den Baufachmann während eines Rundganges mit sich getragen werden braucht, wie in Figur 2 gezeigt. Der H/PC 2 ist mit einer Batterie (womit der H/PC etwa acht Stunden zu benutzen ist), einem Adapter um die Batterie wiederaufzuladen und einem Modem (56K) um via das Telefonnetz mit dem zentralen Computer zu kommunizieren ausgerüstet. Der H/PC 2 ist weiter mit einem Bildschirm 7 und Eingabemitteln 8,9, wie zum Beispiel einem Keyboard 8, versehen. Vorzugsweise ist der H/PC 2 ebenfalls mit einem Touchscreen 7 zum Eingeben von Daten mittels zum Beispiel eines Schreibstiftes 9 versehen.

Das Betriebssystem des gewählten H/PC 2 ist "Windows CE for the handheld PC". Das ist eine spezielle Ausführung von "Microsoft Windows" und ist unter anderem für mobile Systeme beabsichtigt. "Windows CE" kennzeichnet sich dadurch daß das System nie ausgeschaltet wird und immer in einer Art Schlafstand auf dem Hintergrund wirksam bleibt. Der Vorteil hiervon ist, daß ein System sehr schnell startet und sofort in die Situation zurückkehrt, worin es ausgeschaltet war. Ein Nachteil ist, daß die Daten im internen Speicher gespeichert werden und verlorengehen können falls die Batterie und die Reservebatterie leer geraten. Weil das Verlieren von Daten unakzeptabel ist, ist eine spezifische Lösung entwickelt. Sowohl die dynamischen wie auch die statistischen Daten die für das Funktionieren der Prüfvorrichtung notwendig sind, werden auf einem personengebundenen Flash-Speichermodul ("flash-memory-card") gespeichert. Dieses Modul umfaßt alle Information die notwendig ist, um den Prüfcomputer 2 für den betreffenden Benutzer einzurichten. Dieses Einrichten geschieht völlig automatisch durch ein Programm, das auf dem Speichermodul vorhanden ist. Die Zuverlässigkeit eines derartigen Speichermoduls ist sehr hoch und die Chance, daß das Modul mechanisch kaputt geht, ist fast zu vernachlässigen.

Das Kaputtgehen des Prüfcomputers 2 kann für Probleme bei der Ausführung der Arbeit sorgen. Das Übertragen des Speichermoduls in einen neuen Computer ist dann ausreichend, um einen neuen Prüfcomputer 2 einzurichten nach der Situation wie der kaputte Prüfcomputer war bevor er kaputt ging. Der Benutzer kann ab diesem Punkt wieder normal weiterarbeiten. Internetverbindungen, elektronische Post und allerlei andere technische Einstellungen die Unterstützung vom ICT Personal fordern, sind hierdurch nicht nötig.

Das Einrichten des Prüfcomputers 2 kann auch durch den Benutzer manuell aufgerufen werden, falls die Software des Prüfcomputers 2 (manchmal durch eigenes Zutun) beschädigt ist. Das Einrichtungsprogramm stellt alle Einstellungen wieder her gemäß der ursprünglichen Werte und sorgt dafür daß der Prüfcomputer 2 gebührendermaßen wirkt.

Die Benutzung eines Flash-Speichers gegen Verlust von Daten ist nicht ausreichend, weil "Windows CE" Daten nicht direkt speichert, sondern zuerst in einem Cache-Speicher speichert. Das geschieht, um die Geschwindigkeit der Software zu erhöhen. Ein Nachteil ist daß, falls ein Prüfcomputer 2 blockiert, die Daten noch nicht auf dem Flash-Speicher stehen und hierdurch doch verlorengehen. Dazu umfaßt der Prüfcomputer 2 einen speziellen Algorithmus, der dafür sorgt, daß die eingegebenen Daten so schnell wie möglich, und zum Beispiel in festen Momenten, auf dem Flash-Speicher gespeichert werden.

Wie aus Obengenanntem hervorgeht, ist die Prüfapplikation gemäß dieser Beispielausführungsform eine sogenannte "off-line" Applikation, die eingegebene Daten lokal speichert und später mit anderen Systemen, wie einem zentralen Compter, austauscht. Bezüglich der "on-line" Applikationen, welche natürlich auch angewandt werden können, kann hierdurch die Komplexität der Prüfapplikation viel höher sein, ist die Leistungsfähigkeit der Prüfvorrichtung höher und wird die Verfügbarkeit nicht durch die Deckung von einem zum Beispiel mobilen Telekommunikationsnetz bestimmt.

Bei der Wahl einer Prüfung füllt die Applikation auf dem Prüfcomputer 2 sich mit den Daten, die zu der Prüfung gehören. Der übergroße Teil der Standarddaten ist hierdurch schon im Anfang vorhanden und werden Fehler wie Adressen und Namen vermieden. Diese Daten werden auch für das Drucken der Prüfbescheinigungen benutzt und sind also besonders wichtig. Nach der Wahl der Prüfung überprüft die Applikation ob bei der Prüfung Besonderheiten zu vermelden sind und wird abhängig hiervon diese Daten zeigen oder direkt den Prüfeingabeschirm auf dem Prüfcomputer öffnen. Diese Besonderheiten sind zum Beispiel Daten die den Baufachmännern noch mitgeteilt werden müssen.

Die Prüfung ist derartig organisiert, daß der Baufachmann eine minimale Menge Text zu tippen braucht. Ausgangspunkt der Prüfapplikation ist das Aufzeichnen eines Defekts. Ein Defekt wird aufgezeichnet durch das Treffen von Wahlen aus einer Liste, wodurch eine Prüfzeile entsteht. Die Prüfung ist wie einen Baum aufgebaut; der Prüfbaum. Das ist ein Satz Baubezeichnungen, die gegenseitig eine derartige Relation haben, daß eine sich immer verzweigende Struktur entsteht. Der Prüfbaum repräsentiert das für die Prüfvorrichtung entwickelte Modell einer Wohnung mit allen möglichen Defekten. Um einen Defekt registrieren zu können, brauchen die unterschiedlichen Niveaus des Baums durchgegangen zu werden. Bei jeder Wahl aus der Liste wird bestimmt welchem Zweig gefolgt werden muß. Der Baum sorgt dann dafür, daß nur noch die Wahlen gezeigt werden, die zu dem gewählten Zweig gehören.

Der Baum zum Prüfen eines Immobiliars fängt zum Beispiel bei der Wahl der Art Wohnung an und darauf des Etages und des Raums; kurzum die Bestimmung des Ortes. In dem Raum können dann die gewünschten Objekte (wie Türe, Wände usw.) gewählt werden. In der letzten Phase wird angegeben was der Defekt des Objekts ist. Das heißt, daß bei jedem Wahlmoment in dem Prüfbaum die Fortsetzung von der genommenen Wahl abhängt. In der Applikation gemäß dieser Beispielausführungsform wird ein Defekt in maximal neun Schritten registriert und entsteht ein niederländischer Satz, der nicht völlig grammatisch korrekt ist, aber sich sehr lesbar zeigt.

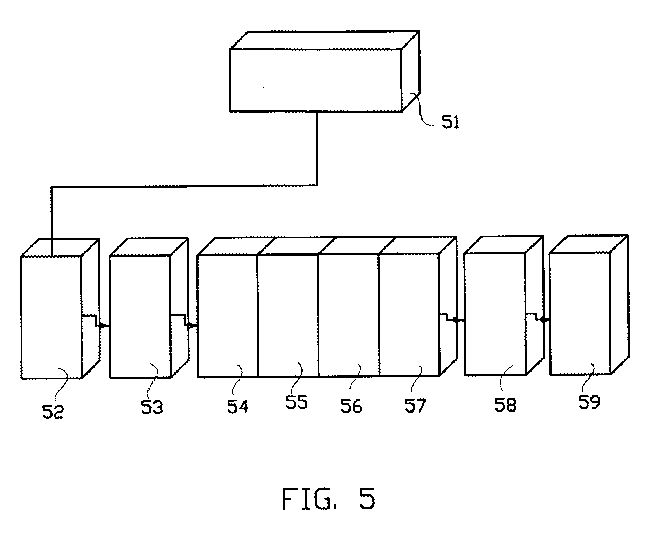

Wie in Figur 5 gezeigt, ist der formelle Aufbau eines registrierten Defekts in drei Niveaus aufgeteilt, worin die Stelle im Bauobjekt bestimmt wird, durch vier das Objekt beschreibende Niveaus gefolgt und mit zwei den Defekt angebenden Niveaus abgeschlossen.

### Erstes Niveau (Wohnungtyp)

Beim Anfang einer Prüfung soll einmalig auf diesem Niveau 51 die Art Wohnung selektiert werden. Beispiele sind: Appartement/Etagenwohnung/gemeinsamen Teil Apartementhaus, Eck/Endwohnung, Reihenhaus, Doppelhaus oder freie Wohnung. Die gemachte Wahl beeinflußt die Fortsetzung der Wahlen die gemacht werden können. Zum Beispiel gibt es in einem Reihenhaus nicht dieselben Etagen wie in einem Appartement.

### Zweites Niveau (Etage)

Auf diesem Niveau 52 kann die Etage selektiert werden, wie zum Beispiel den Boden, dritte Etage, Parterre oder Keller.

### Drittes Niveau (Raum)

Auf diesem Niveau 53 kann selektiert werden, in welchem Raum der Defekt sich befindet, wie zum Beispiel Flur, ZH Raum, Bad/Duschraum.

Bei der Wahl von Lokationen oder aber Objekte die von Natur aus mehrfach in einem Bauprojekt vorkommen, wird die Prüfapplikation eine vorab definierte Liste von ortsbestimmenden Elementen zeigen um die Wahlen unterscheiden zu können. So wird ein Schlafzimmer zum Beispiel mit der Bezeichnung ("Elter") ergänzt werden können.

### Viertes bis einschließlich siebendes Niveau (Objekt)

Das Bestimmen eines Objektes geschieht meistens in maximal vier Schritten. Auf diesen vier Niveaus 54, 55, 56 und 57, kann angedeutet werden welche Teile anwendbar sind. Die Anzahl Schritte, erforderlich für die Ernennung, hängt von der Art Objekt ab, zum Beispiel:
Innenzarge → Tür → Beschläge
Wand → Spritzwerk
Außenzarge → Fenster → Verglasung

### Achtes Niveau (Defektgruppe)

In diesem Niveau 58 sind Defektgruppen zusammengestellt, worin angehörige Defekte genannt sind. Zum Beispiel: Montage/Befestigung, Abmessung/Volumen, Funktionieren, Oberfläche, Ränder/Nähte, Malerarbeiten, Verschalung, Außenmalerarbeiten, Innenmalerarbeiten, Entfernungsfehler, usw.

### Neuntes Niveau (Defekte)

Auf diesem Niveau 59 wird angedeutet, was der Defekt ist. Das kann via eine Defektgruppe (in zwei Schritten) oder durch direkt einen Defekt anzudeuten. Zum Beispiel, die Montage/Befestigung der Beschläge ist unordentlich. Die Wahl des Defekts ist normalerweise immer der letzte Schritt beim Herstellen einer Defektvorschrift.

In manchen Fällen wird von dieser festen Einteilung abgewichen um die Defekte schneller wählen zu können. So sind hinter manchen Objekten, falls der Prüfbaum dies erlaubt, unmittelbar Defekte aufgenommen. Das ist nur möglich bei Objekten, wofür keine oder kaum Teile zu ernennen sind. Das unmittelbar Aufnehmen ist um so schnell wie möglich einen Defekt ernennen zu können.

Auch ist das Herstellen von Skizzen mittels des Schreibstiftes 9 auf dem Touchscreen 7 möglich. In den Prüfbescheinigungen können diese Skizzen, zum Beispiel in Briefmarkenformat zur Illustration der Befunde gedruckt werden.
Falls noch weitere ergänzende Daten eingegeben werden müssen, können die nachträglich aus zusätzlichen Standardlisten oder manuell auf dem Keyboard 8 eingetippt werden.

Für die Abhandlung der finanziellen Daten hantiert die Prüfvorrichtung standard Preisliste, die ab einem zentralen Computer geschickt werden. Die Kosten für das Ausführen einer Prüfung werden letztlich aus der Basissumme mit zusätzlichen Halbstunden ergänzt, bestimmt. Die Endsumme wird auf der finanziellen Verantwortung auf dem Schirm gezeigt und der Auftraggeber kann hierfür auf dem Schirm einen Inkassoauftrag unterzeichnen. Nach Empfang des Inkassoauftrages wird aus dem "Back-office" diese Zahlung effektuiert.

Am Ende einer Prüfung kann weiter noch eine Anzahl allgemeiner Fragen gestellt werden, die mit einem Niveauscore (zum Beispiel 5 Niveaus) beantwortet werden kann. Die Prüfapplikation verschafft das dynamisch Erledigen von zusätzlichen Fragen, womit pro Region Fragen, die einen Marketingcharakter haben, gestellt werden können. Auch die Antworten auf diese Fragen werden im Datenbestand aufgenommen zur weiteren Behandlung.

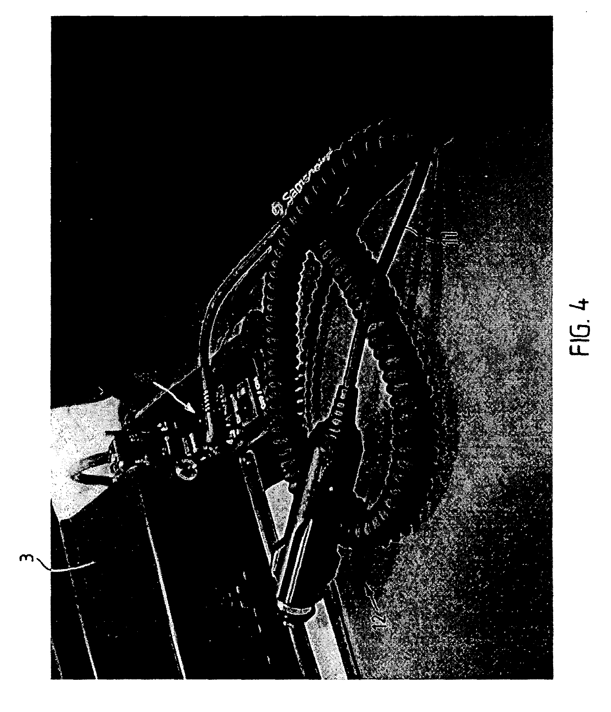

Nachdem alle Daten für eine Prüfung eingegeben worden sind, kann der H/PC 2 an dem Drucker 3 angeschlossen werden, wie in Figur 4 gezeigt. Eine Prüfbescheinigung kann dann an Ort und Stelle in hoher Qualität gedruckt werden.

Der Drucker 3 benutzt einen thermischen Druckprozeß auf speziell entwickeltem Papier 4. Das Papier 4 ist auf einer Rolle 5 mit großem Diameter gerollt, um dem Kringeln des Papiers entgegenzutreten. Die Rolle 5 umfaßt A4 Format Blätter, die vorgedruckt sein können, und die mittels einer Perforationslinie voneinander zu trennen sind. Vorzugsweise ist das Papier an der Hinterseite mit einer Codierung versehen, wodurch das Papier 4 durch den Drucker 3, der Mittel zum Detektieren der Codierung umfaßt, genau positioniert werden kann und/oder ein Seitenende festgestellt werden kann. Das eine oder das andere kann benutzt werden, um den Text der Prüfbescheinigung auf der gewünschten Position auf dem eventuell vorbedrucktem Papier zu drucken.

Weiter kann der H/PC 2 via sein Modum mit dem zentralen Computer gekoppelt werden um die eingegebenen Daten der Prüfung zu diesem zentralen Computer zu schicken.

Zum Schluß wird hier noch auf die Möglichkeit um die Prüfapplikation via die Kommunikationsmittel zu unterhalten, hingewiesen. Verbesserungen sowie Programmanpassungen der Prüfapplikation können via den zentralen Computer auf dem Prüfcomputer 2 der Prüfvorrichtung gemäß dieser Beispielausführungsform installiert werden. Die Verbesserungen betreffen zum Beispiel den Inhalt des Prüfbaums, womit der Ausgang der Wahllisten bestimmt wird.

## Patentansprüche

1. Prüfvorrichtung zum Herstellen einer Prüfbescheinigung, wobei die Prüfvorrichtung Computermittel umfassend einen Bildschirm, Eingabemittel, eine Verarbeitungsvorrichtung und Speichermittel umfaßt,
wobei die Speichermittel mit einem Datenbestand versehen sind, umfassend eine Anzahl, in einer Anzahl Wahllisten, geordneter, vorab definierter Wahlmöglichkeiten, die zusammen einen Prüfbaum zum Eingeben von Daten bezüglich eines während einer Prüfung konstatierten Defekts bilden,
wobei die Verarbeitungsvorrichtung mit Programmanweisungen zum Ausführen der nachfolgenden Schritte versehen ist:
das Darstellen einer Anzahl verschiedener Wahllisten mit Wahlmöglichkeiten auf dem Bildschirm, wobei die wiedergegebenen Wahlmöglichkeiten mittels der Eingabemittel zum Eingeben eines konstatierten Defekts zu selektieren sind; und
das Verarbeiten von selektierten Wahlmöglichkeiten aus den verschiedenen Wahllisten eines eingegebenen Defekts zu einer zu einem Satz geordneten sprachlichen Äußerung für Zufügung an die Prüfbescheinigung.

2. Prüfvorrichtung nach Anspruch 1, wobei die Programmanweisungen Anweisungen umfassen zum Steuern vom Darstellen von Wahllisten in Abhängigkeit der selektierten Wahlmöglichkeiten.

3. Prüfvorrichtung nach Anspruch 2, wobei der Prüfbaum eine Anzahl Wahllisten umfaßt, wobei das Selektieren einer Wahlmöglichkeit aus einer ersten Wahlliste bestimmt, welche folgende Wahlliste auf dem Bildschirm wiedergegeben wird, und wobei das Selektieren einer Wahlmöglichkeit aus verschiedenen Wahllisten zu einem konstatierten Defekt konvergiert.

4. Prüfvorrichtung nach Anspruch 1, 2 oder 3, wobei die Speichermittel weiter an den Wahlmöglichkeiten gekoppelte Textteile umfassen, und wobei die Verarbeitungsvorrichtung vorzugweise einen Arbeitsspeicher umfaßt zum hierin Anordnen der mit einer selektierten Wahlmöglichkeit aus einer Wahlliste gekoppelten Textteile.

5. Prüfvorrichtung nach Anspruch 4, wobei die Verarbeitungsvorrichtung mit weiteren Programmanweisungen versehen ist zum Umformen und/oder Ordnen der mit den selektierten Wahlmöglichkeiten aus den verschiedenen Wahllisten eines eingegebenen Defekts gekoppelten Textteile zu einer zu einem Satz geordneten sprachlichen Äußerung für Zufügung an die Prüfbescheinigung.

6. Prüfvorrichtung nach einem der vorhergehenden Ansprüche, weiter umfassend eine Druckvorrichtung zum Drucken der zu einem Satz geordneten sprachlichen Äußerung zum Herstellen eines Drucks der Prüfbescheinigung.

7. Prüfvorrichtung nach einem der vorhergehenden Ansprüche, wobei die Prüfvorrichtung weiter Kommunikationsmittel, vorzugsweise drahtlose Kommunikationsmittel, umfaßt.

8. Prüfvorrichtung nach einem der vorhergehenden Ansprüche, wobei die Speichermittel erste Speichermittel zum Speichern des Prüfbaums, und/oder zweite Speichermittel zum Speichern von Daten bezüglich eines Prüfauftrags, und/oder dritte Speichermittel zum Speichern der eingegebenen Daten der Prüfbescheinigung umfaßt, wobei diese ersten, zweiten und/oder dritten Speichermittel vorzugsweise entkoppelbar angeordnet sind zum Übertragen der Speichermittel in eine weitere Prüfvorrichtung.

9. Prüfvorrichtung nach einem der vorhergehenden Ansprüche, wobei die Prüfvorrichtung eine Diebstahlsicherung umfaßt, wobei die Diebstahlsicherung vorzugsweise eine Spannungsbewachung umfaßt, die an eine externe Stromquelle anzuschließen ist, wobei die Diebstahlsicherung zum Generieren eines akustischen Signals beim Wahrnehmen von einem Ausfallen der Stromquelle eingerichtet ist, wobei die externe Stromquelle vorzugsweise einen Autoakku oder ein Elektrizitätsnetz umfaßt.

10. Prüfvorrichtung nach einem der vorhergehenden Ansprüche, wobei die Prüfvorrichtung zum Prüfen von Immobilien eingerichtet ist, wobei die vorab definierten Wahlmöglichkeiten vorzugsweise Lokationen, Objekte an der gewählten Lokation und Defekte des gewählten Objekts umfassen.

11. Verfahren zum Herstellen einer Prüfbescheinigung mittels einer Prüfvorrichtung umfassend Computermittel umfassend einen Bildschirm, Eingabemittel, eine Verarbeitungsvorrichtung und Speichermittel,
wobei die Speichermittel mit einem Datenbestand versehen sind, umfassend eine Anzahl, in einer Anzahl Wahllisten, geordneter, vorab definierter Wahlmöglichkeiten, die zusammen einen Prüfbaum zum Eingeben von Daten bezüglich eines während einer Prüfung konstatierten Defekts bilden,
wobei das Verfahren die nachfolgenden Schritte umfaßt:
das Darstellen einer Anzahl verschiedener Wahllisten mit Wahlmöglichkeiten auf dem Bildschirm;
das Selektieren von zumindest einer der auf dem Bildschirm dargestellen Wahlmöglichkeiten mittels der Eingabemittel zum Eingeben eines konstatierten Defekts; und
das Verarbeiten von selektierten Wahlmöglichkeiten aus den verschiedenen Wahllisten eines eingegebenen Defekts zu einer zu einem Satz geordneten sprachlichen Äußerung für Zufügung an die Prüfbescheinigung.

12. Verfahren nach Anspruch 11, wobei der Prüfbaum eine Anzahl Wahllisten umfaßt, wobei das Selektieren einer Wahlmöglichkeit aus einer ersten Wahlliste bestimmt welche folgende Wahlliste auf dem Bildschirm wiedergegeben wird, und wobei das Selektieren einer Wahlmöglichkeit aus verschiedenen Wahllisten zum konstatierten Defekt konvergiert.

13. Verfahren nach Anspruch 11, wobei die Verarbeitungsvorrichtung einen Arbeitsspeicher umfaßt, und wobei nach dem Selektieren einer Wahlmöglichkeit ein mit der selektierten Wahlmöglichkeit aus einer Wahlliste korrespondierender Textteil in dem Arbeitsspeicher angeordnet wird.

14. Verfahren nach Anspruch 13, wobei die Verarbeitungsvorrichtung die mit den selektierten Wahlmöglichkeiten aus den verschiedenen Wahllisten eines eingegebenen Defekts korrespondierenden Textteile in dem Arbeitsspeicher zu einer zu einem Satz geordneten sprachlichen Äußerung für Zufügung an die Prüfbescheinigung transformiert.

15. Verfahren nach den Ansprüchen 11-14, wobei die vorab definierten Wahlmöglichkeiten zum Prüfen von Immobilien angepasst sind, wobei die vorab definierten Wahlmöglichkeiten vorzugsweise Lokationen, Objekte auf der gewählten Lokation und Defekte des gewählten Objekts umfassen.

16. Computerprogramm umfassend Programmanweisungen, die falls in einem Computer geladen, zumindest einen Teil der Verarbeitungsvorrichtung nach einem der Ansprüche 1-10 bilden.

17. Computerprogramm umfassend Programmanweisungen zum durch den Computer Ausführen lassen des Verfahrens nach einem der Ansprüche 11-15.

18. Computerprogramm nach Anspruch 16 oder 17, auf einem Datenträger enthalten.

19. Computerprogramm nach Anspruch 16 oder 17, in einem Computerspeicher gespeichert.

20. Computerdatensignal in einer Trägerwelle zum Ausführen des Verfahrens nach einem der Ansprüche 11-15 enthalten.
